(19) Europäisches Patentamt
European Patent Office
Office européen des brevets

(11) Publication number: **0 537 359 A1**

(12) **EUROPEAN PATENT APPLICATION published in accordance with Art. 158(3) EPC**

(21) Application number: **92907178.5**

(51) Int. Cl.[5]: **D21H 17/62**

(22) Date of filing: **26.03.92**

(86) International application number: **PCT/JP92/00375**

(87) International publication number: **WO 92/17645 (15.10.92 92/26)**

(30) Priority: **05.04.91 JP 101982/91**

(43) Date of publication of application: **21.04.93 Bulletin 93/16**

(84) Designated Contracting States: **AT DE FR GB IT SE**

(71) Applicant: **ARAKAWA CHEMICAL INDUSTRIES, LTD.**
**3-7, Hiranomachi 1-chome**
**Chuo-ku, Osaka-shi, Osaka 541(JP)**

(72) Inventor: **NAKAJIMA, Masato**
**11-8, Fujisakahigashimachi 4-chome**
**Hirakata-shi Osaka 573-01(JP)**
Inventor: **INOUE, Tetsuya**
**Arakawakagakukogyo K. K. Seiwaryo**
**5-38 Tsurumi 8, Tsurumi 1-chome**
**Tsurumi-ku**
**Osaka-shi, Osaka 538(JP)**
Inventor: **TANI, Nobuyuki**
**Arakawakagakukogyo K. K. Seiwaryo**
**5-38 Tsurumi 1-chome Tsurumi-ku**
**Osaka-shi Osaka 538(JP)**

(74) Representative: **Weinhold, Peter, Dr.**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40 (DE)**

(54) **ROSIN EMULSION SIZE FOR PAPERMAKING AND PROCESS FOR SIZING PAPER.**

(57) A rosin emulsion size for papermaking prepared by dispersing a reaction product in water in the presence of a polymeric dispersant, said reaction product being obtained by reacting a rosin (a) with a polyhydric alcohol (b) and an $\alpha$, $\beta$-unsaturated carboxylic acid derivative (c) sequentially or simultaneously at such a feed ratio that the ratio of the hydroxyl equivalent of component (b) to the carboxyl equivalent of component (a) ranges from 0.1 to 1.5; and a process for sizing paper by using the size in a pH range of 4 to 8.

EP 0 537 359 A1

## TECHNICAL FIELD

The present invention relates to novel rosin emulsion sizing agents for papermaking and a paper sizing method.

## BACKGROUND ART

With a demand for the use of closed papermaking systems owing to waste water regulations and with the change of the papermaking pH from acid range to neutral range due to the use of waste paper, rosin emulsion sizing agents are in predominant use instead of saponified rosin sizing agents in the papermaking industry in recent years.

Such emulsion sizing agents are obtained by dispersing a fortified rosin in the presence of a suitable dispersant by various methods. Examples of useful dispersants are so-called low-molecular-weight dispersants such as sodium alkylsulfates, sodium alkylbenzenesulfonates, polyoxyethylene alkyl phenyl ethers and sulfuric acid ester salts of polyoxyethylene alkyl phenyl ethers. However, emulsion sizing agents prepared with use of the low-molecular-weight dispersant markedly bubble up when used for papermaking and fail to produce a satisfactory sizing effect when used for papermaking at high temperatures or high pH values.

Rosin emulsion sizing agents have been developed recently in which a polymer dispersant is used in place of the low-molecular-weight dispersant and which are usable almost free of bubbling for papermaking. Nevertheless, such rosin emulsion sizing agents prepared from a fortified rosin and polymer dispersant are still unsatisfactory in sizing effect for use in papermaking at high temperatures or high pH values. Although still remaining to be clarified, the reason why these agents exhibit a reduced sizing effect in papermaking at high pH appears attributable to the migration of a portion of fortified rosin into water and impaired activity of aluminum sulfate which occur with the lapse of time, consequently permitting the pulp to retain a decreased proportion of the agent.

## DISCLOSURE OF THE INVENTION

An object of the present invention is to provide a novel rosin emulsion sizing agent which is usable for papermaking free of the drawbacks of the prior art, and a method of sizing paper with use of the sizing agent.

Another object of the present invention is to provide a papermaking rosin emulsion sizing agent which is effectively usable over a wide pH range, achieves a satisfactory sizing degree in papermaking even at high temperatures, is less susceptible to bubbling and can be handled with ease for use, and a method of sizing paper with use of the sizing agent.

These and other objects of the invention will become apparent from the following description.

The present invention provides a rosin emulsion sizing agent for papermaking which is characterized in that a reaction product is dispersed in water in the presence of a polymer dispersant, the reaction product being prepared by successively or simultaneously reacting (b) a polyhydric alcohol and (c) an $\alpha,\beta$-unsaturated carboxylic acid derivative with (a) a rosin, the ratio of equivalent of hydroxyl group in the alcohol (b) to equivalent of carboxyl group in the rosin (a) being 0.1-1.5:1. The invention also provides a paper sizing method characterized by using the rosin emulsion sizing agent at a pH of 4 to 8.

To overcome the foregoing drawbacks of the prior art, we have conducted extensive research on rosin emulsion sizing agents incorporating a polymer dispersant, with attention directed to rosin substances serving as base resins. Consequently, we have found that when a rosin is modified with an $\alpha,\beta$-unsaturated carboxylic acid and esterified with a polyhydric alcohol to obtain a reaction product for use as the rosin substance, the rosin substance is satisfactorily retainable in pulp without migrating into water when used for papermaking even at high pH, exhibits an excellent sizing effect over a wide pH range, is less susceptible to bubbling and can be handled with ease for use. The present invention has been accomplished based on these novel findings.

The base resin of the sizing agent of the present invention is a specific reaction product prepared from (a) a rosin, (b) a polyhydric alcohol and (c) an $\alpha,\beta$-unsaturated carboxylic acid derivative. The reaction product is a compound obtained by esterifying the rosin with a specified amount of polyhydric alcohol and modifying the rosin with an $\alpha,\beta$-unsaturated carboxylic acid. The term "rosin (a)" as used herein refers to gum rosin, wood rosin, tall oil rosin or the like. Modified rosins such as hydrogenated rosins, disproportionated rosins, polymerized rosins, aldehyde-modified rosins or the like may be used in a proportion conjointly with such a rosin.

Further according to the invention, the esterification with the polyhydric alcohol (b) means esterification of at least one of rosins and $\alpha,\beta$-unsaturated carboxylic acid-modified rosins and includes both complete esterification and partial esterification.

Although the polyhydric alcohol (b) can be one of a wide variety of those already known, it is preferable to use trihydric or tetrahydric alcohols. Examples of useful alcohols are trihydric alcohols such as glycerin, trimethylolpropane, trimethylolethane and 3-methylpentane-1,3,5-triol, tetrahydric alcohols such as pentaerythritol and diglycerin, and amino-alcohols such as triethanolamine and triisopropanolamine. These alcohols are used singly, or at least two of them are used.

Further according to the present invention, it is required that the rosin be modified with an $\alpha,\beta$-unsaturated carboxylic acid derivative. This achieves an improved sizing effect in the neutral range. Examples of such $\alpha,\beta$-unsaturated carboxylic acid derivatives are maleic anhydride, maleic acid, maleic acid monoesters or maleic acid diesters obtained from a lower alcohol and maleic anhydride, fumaric acid, N-alkylmaleimides, itaconic acid, itaconic acid anhydride, acrylic acid and the like, among which maleic anhydride, maleic acid, maleic acid monoesters, itaconic acid and itaconic acid anhydride are desirable.

The reaction product serving as the base resin for forming the dispersion phase of the present sizing agent is obtained by successively or simultaneously reacting the polyhydric alcohol (b) and the $\alpha,\beta$-unsaturatedcarboxylic acid derivative (c) with the rosin (a). The term "successively" as used herein means the reaction of (b) with (a), followed by the reaction of (c) with the reaction product, or the reaction of (c) with (a), followed by the reaction of (b) with the reaction product.

The case of the reaction of (b) with (a), followed by the reaction of (c) with the reaction product will be described. First, the rosin (a) and the polyhydric alcohol (b) are subjected to an esterification reaction by a known process. More specifically, the two compounds are charged into a reactor and then stirred for 3 to 40 hours at a temperature of about 150 to about 300 °C under atmospheric, reduced or increased pressure in accordance with the boiling point of the polyhydric alcohol for dehydration condensation. When required for the reaction, benzene, toluene, xylene or like solvent can be used to effect azeotropic dehydration.

According to the present invention, the rosin and the polyhydric alcohol must be charged into the reactor in a specified ratio of 0.1 to 1.5, preferably 0.1 to 1.0, in terms of the ratio of equivalent of hydroxyl group in the polyhydric alcohol to equivalent of carboxyl group in the rosin [-OH(eq)/-COOH(eq)]. If the equivalent ratio is less than 0.1, the sizing agent obtained will not exhibit a satisfactorily improved sizing effect in the neutral range and is therefore undesirable. Equivalent ratios in excess of 1.5 are not desirable either. A large amount of free hydroxyl will then remain in the polyhydric alcohol ester of rosin formed, so that the sizing agent obtained exhibits an impaired sizing effect due to the remaining hydroxyl.

The reaction usually produces a mixture containing a completely esterified product wherein all the hydroxyl groups of the polyhydric alcohol are esterified with the carboxyl groups of the rosin, a partially esterified product wherein some of the hydroxyl groups are esterified and unreacted materials. In the present invention, the mixture is subsequently modified with the $\alpha,\beta$-unsaturated carboxylic acid derivative (c) under known conditions. More specifically, (c) is added to the reaction mixture of (a) and (b) obtained, and the mixture can be reacted under usual conditions, for example, at a temperature of about 150 to about 300 °C for about 0.5 to about 24 hours to afford the desired reaction product.

The $\alpha,\beta$-unsaturated carboxylic acid derivative (c) is used for this reaction usually in an amount of up to 1 mole, preferably about 0.05 to about 0.75 mole, more preferably about 0.10 to about 0.70 mole, per mole of the rosin (a).

Alternatively, (c) can be reacted with (a), followed by the reaction of (b) with the resulting reaction product. In this case, the rosin (a) is modified with the $\alpha,\beta$-unsaturated carboxylic acid derivative (c) under the same modifying condition as above, and the reaction product obtained is esterified with the polyhydric alcohol (b) under the same esterifying condition as above at an equivalent ratio in the above-specified range, whereby the desired reaction product is obtained.

Furthermore, (a), (b) and (c) can be reacted simultaneously. In this case, the desired product is obtained by reacting with the rosin (a) the polyhydric alcohol (b) in an equivalent ratio within the foregoing range and the $\alpha,\beta$-unsaturated carboxylic acid derivative (c) usually at a temperature of about 150 to about 300 °C for about 3 to about 40 hours.

The reaction product obtained is usually about 90 to about 130 in softening point and about 140 to about 270 in acid value.

The reaction product is usually a mixture containing an $\alpha,\beta$-unsaturated carboxylic acid-modified rosin ester, rosin ester, $\alpha,\beta$-unsaturated carboxylic acid-modified rosin and unreacted materials. With the present invention, the reaction product is usable as it is for the dispersion phase of sizing agents insofar as it is a specified product.

The reaction product usually contains at least 5 wt. % of α,β-unsaturated carboxylic acid-modified rosin ester (completely esterified product and/or partially esterified product) and rosin ester (completely esterified product and/or partially esterified product) not modified with the carboxylic acid, based on the total solids content of the reaction product. When required, α,β-unsaturated carboxylic acid-modified rosins, rosins and the like may be added to the reaction product. In this case, the total content of α,β-unsaturated carboxylic acid-modified rosin esters and rosin esters in the resulting mixture is preferably at least 5 wt. % based on the total solids content. More preferably, the content is at least 10 wt. % in view of the properties of the sizing agent to be obtained. The proportion of these esters, if less than 5 wt. %, is undesirable since a reduced sizing effect will then result.

According to the invention, the reaction product, i.e., rosin substance, is dispersed in the presence of a polymer dispersant. The polymer dispersant is not limited specifically. Advantageously usable as such a dispersant is any of anionic copolymers, cationic copolymers and amphoteric copolymers which are obtained by copolymerizing various unsaturated monomers. Generally, the anionic copolymer is a copolymer comprising 20 to 80 wt. %, preferably 30 to 70 wt. %, of an anionic unsaturated monomer, and 20 to 80 wt. %, preferably 30 to 70 wt. %, of a nonionic unsaturated monomer. The cationic copolymer is a copolymer comprising 1 to 90 wt. %, preferably 10 to 60 wt. %, of a cationic unsaturated monomer, and 10 to 99 wt. %, preferably 40 to 90 wt. %, of a nonionic unsaturated monomer. The amphoteric copolymer is a copolymer comprising 1 to 60 wt. %, preferably 10 to 40 wt. %, of an anionic unsaturated monomer, 1 to 60 wt. %, preferably 10 to 40 wt. %, of a cationic unsaturated monomer, and 2 to 90 wt. %, preferably 20 to 80 wt. %, of a nonionic unsaturated monomer. Among such copolymers, cationic copolymers or amphoteric copolymers are desirable to use since the emulsion sizing agent then obtained can be fixed to the pulp more effectively especially when a small amount of aluminum sulfate is used or when a high pH condition is employed.

Examples of anionic unsaturated monomers are various ethylenically unsaturated carboxylic acids such as acrylic acid, methacrylic acid, itaconic acid and maleic anhydride, or ammonium salts or alkali metal salts of these acids. Among these, acrylic acid and methacrylic acid are especially desirable. To convert the component anionic unsaturated monomer to an ammonium salt or alkali metal salt, the copolymer obtained by the polymerization process to be described later can be neutralized with an alkali such as ammonia, lower amine or alkali metal hydroxide. The anionic unsaturated monomer is used to impart anionic properties to the copolymer obtained for use as a dispersant, and is effective for remarkably improving aqueous emulsions in dispersion stability and sizing effect.

Examples of cationic unsaturated monomers are N,N-dialkylaminoalkyl (meth)acrylates, N,N-dialkylaminoalkyl (meth)acrylamides, mineral acid salts of these monomers and these monomers as quaternized; allylamine, diallylamine, diallylmonomethylamine, dimethyldiallyl ammonium chloride, etc. Preferable among these examples are N,N-dimethylaminomethyl (meth)acrylate, N,N-dimethylaminoethyl (meth)acrylate, N,N-diethylaminomethyl (meth)acrylate, N,N-diethylaminoethyl (meth)acrylate, N,N-dimethylaminopropyl (meth)acrylate, N,N-diethylaminopropyl (meth)acrylate, N,N-dimethylaminomethyl (meth)acrylamide, N,N-dimethylaminoethyl (meth)acrylamide, N,N-diethylaminomethyl (meth)acrylamide, N,N-diethylaminoethyl (meth)acrylamide, N,N-dimethylaminopropyl (meth)acrylamide, N,N-diethylaminopropyl (meth)acrylamide, mineral acid salts of these compounds and these compounds as quaternized. Suitable mineral acids for preparing such mineral acid salts are hydrochloric acid, sulfuric acid and the like. The quaternizing agent is not limited specifically but various compounds known as such are usable. Preferable examples of such agents are epihalohydrin, methyl halides, benzyl halides, methylsulfuric acid, etc. While the quaternization reaction is conducted for the monomer, the copolymer obtained can also be subjected to this reaction. Especially desirable among the examples given above are N,N-dimethylaminoethyl (meth)acrylate, N,N-dimethylaminopropyl (meth)acrylamide, mineral acid salts of these compounds and these compounds as quaternized.

Examples of nonionic unsaturated monomers are (meth)acrylic acid esters represented by the formula

$$CH_2 = \overset{\displaystyle R^1}{\underset{\displaystyle COOR^2}{C}} \qquad (1)$$

wherein $R^1$ is a hydrogen atom or methyl, and $R^2$ is alkyl having 1 to 22 carbon atoms, alkenyl having 3 to 22 carbon atoms, cyclohexyl, phenyl, benzyl,

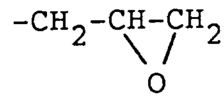

group, furfuryl alcohol residue, rosin alcohol residue derived from natural rosin,

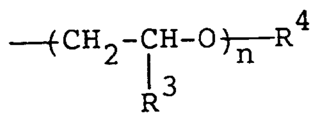

group (wherein $R^3$ is a hydrogen atom or methyl, $R^4$ is a hydrogen atom, lower alkyl, phenyl, alkylphenyl having 1 to 20 carbon atoms, aralkylphenyl having 1 to 20 carbon atoms or $-CH_2-CH_2-C_8F_{17}$ group, and n is an integer of 1 to 30), or

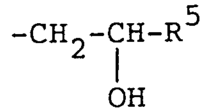

group (wherein $R^5$ is a hydrogen atom, methyl, methylol or

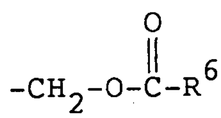

group (wherein $R^6$ is alkyl having 1 to 22 carbon atoms, alkenyl having 3 to 22 carbon atoms, or natural rosin or modified rosin residue)), styrene monomers including styrene, α-metylstyrene and like styrenes, and styrene compounds comprising such a styrene having alkyl with 1 to 4 carbon atoms on its aromatic ring, (meth)acrylamide, (meth)acrylonitrile, vinyl acetate, vinyl propionate, α-olefins having 6 to 22 carbon atoms, alkyl vinyl ethers having 1 to 22 carbon atoms, vinylpyrrolidone and the like. Among these examples, the (meth)acrylic acid esters of the formula (1) and styrene monomers are especially preferable.

Examples of anionic copolymers are styrene-(meth)acrylic acid copolymers, (meth)acrylic acid(meth)-acrylic acid ester copolymers, etc. Examples of cationic copolymers are styrene-N,N-dialkylaminoalkyl (meth)acrylate copolymers, styrene-N,N-dialkylaminoalkyl (meth)acrylamide copolymers, (meth)acrylic acid ester-N,N-dialkylaminoalkyl (meth)acrylate copolymers, (meth)acrylic acid ester-N,N-dialkylaminoalkyl-(meth)acrylamide copolymers, etc. Examples of amphoteric copolymers are styrene-(meth)acrylic acid-N,N-diakylaminoalkyl (meth)acrylate copolymers, styrene-(meth)acrylic acid-N,N-dialkylaminoalkyl(meth)acryl-amide copolymers, (meth)acrylic acid ester-(meth)acrylic acid-N,N-dialkylaminoalkyl (meth)acrylate copolymers, (meth)acrlic acid ester-(meth)acrylic acid-N,N-dialkylaminoalkyl(meth)acrylamide copolymers, etc.

These copolymers can be prepared in the same manner as various known processes such as solution polymerization, emulsion polymerization and suspension polymerization. When solution polymerization is resorted to, solvents such as isopropyl alcohol and methyl isobuthyl ketone are usable. The emulsifier to be used for emulsion polymerization is not limited specifically, but various surfactants are usable. Examples of useful anionic surfactants are dialkylsulfosuccinic acid salts, alkanesulfonic acid salts, α-olefinsulfonic acid salts, polyoxyethylenealkylether sulfosuccinic acid ester salts, polyoxyethylenestyrylphenylether sulfosuccinic acid ester salt, naphthalenesulfonic acid formalin condensate, polyoxyethylenealkylether sulfuric acid ester salts, polyoxyethylenealkylphenylether sulfuric acid ester salts, etc. Examples of useful nonionic surfactants are polyoxyethylene alkyl ethers, polyoxyethylene styrylphenyl ether, polyoxyethylene sorbitan fatty acid esters, etc. One or at least two of these surfactants can be selected suitably for use. The surfactant is used usually in an amount of about 0.1 to about 10 wt. % based on the combined amount of monomers charged into the reactor.

The polymerization initiator to be used for the polymerization is not limited specifically; various initiators such as persulfuric acid salts, peroxides, azo compounds and redox initiators can be used. The molecular

weight of the copolymer is correlated directly with the dispersibility of the rosin substance, so that the copolymer is generally preferably 1000 to 200000 in weight average molecular weight. The molecular weight of the copolymer is adjustable to this range by using a suitable known chain transfer agent such as isopropyl alcohol, carbon tetrachloride, ethylbenzene, isopropylbenzene, cumene, thioglycollic acid ester, alkylmercaptan or 2,4-diphenyl-4-methyl-1-pentene. The agent is used usually in an amount of about 0.5 to about 30 wt. % based on the combined amount of monomers charged in. The copolymer may be dispersible in water although soluble in water usually.

The sizing agent of the present invention can be prepared using the copolymer thus obtained by any of known methods such as those disclosed in Japanese Examined Patent Publication No. 4866/1978 (melting high-pressure emulsifying method), Japanese Examined Patent Publication No. 22090/1978 (solvent high-pressure emulsifying method), Japanese Unexamined Patent Publication No. 77206/1977 and Japanese Examined Patent Publication No. 4938/1983 (reversal emulsifying method).

For example when the solvent high-pressure emulsifying method is used, the sizing agent is prepared by adding the copolymer serving as a dispersant, water and sodium hydroxide, potassium hydroxide, ammonia, lower amine or like alkali substance (which is used when required) to the reaction product for use in the invention, i.e., rosin substance, as dissolved in water-insoluble organic solvent, passing the mixture through a homogenizer, piston-type high-pressure emulsifier, ultrasonic emulsifier or the like to obtain an emulsion and subsequently removing the organic solvent from the emulsion. When to add the copolymer is not limited specifically. When the emulsion is prepared using a small amount of alkali or surfactant, the copolymer can be added to an emulsion as delivered from the emulsifier or after the removal of the solvent. In either case, a satisfactory aqueous emulsion can be prepared.

When the reversal method is used, the sizing agent is prepared, for example, in the following manner. The reaction product for use in the invention, i.e., rosin substance, is heated usually to 90 to 160°C with stirring to obtain a melt, to which an aqueous solution or aqueous emulsion of the copolymer, and a specified amount of hot water are added for phase reversal to prepare an emulsion wherein the reaction product is a dispersed phase and water is a continuous phase.

In the solvent high-pressure emulsifying method or reversal emulsifying method, the copolymer dispersant is used usually in an amount by dry weight of 1 to 30 wt. %, preferably 2 to 20 wt. %, based on the reaction product, i.e., rosin substance. If the amount is less than 1 wt. %, insufficient dispersal will result, whereas use of more than 30 wt. % of dispersant is not economical. The emulsion obtained as desired can be diluted with water or alkali water and thereby adjusted in pH.

In practicing the solvent high-pressure emulsifying method or reversal emulsifying method, a surfactant can be added to the rosin substance along with the copolymer in an amount that will not adversely affect the reduced susceptibility to bubbling and sizing effect of the present agent. Examples of surfactants usable are those exemplified for use in preparing the copolymer by emulsion polymerization.

The rosin emulsion sizing agent prepared usually contains 10 to 70 wt. %, preferably 30 to 55 wt. %, of solids. The emulsion has uniformly dispersed therein the reaction product, i.e., rosin substance, in the form of particles which are up to 1 $\mu$m, generally up to about 0.5 $\mu$m, in size. The aqueous emulsion appears milky white and usually has a pH of 2.0 to 6.5.

The aqueous emulsion sizing agent of the present invention remains stable for at least 6 months at room temperature free of precipitation. Because of its high dilution stability, the agent can be satisfactorily diluted with water of rivers, wells and the like and tap water and effectively dispersed in aqueous dispersions of pulps, further exhibiting good stability for a prolonged period of time when diluted. Moreover, the agent has good mechanical stability and is greatly reduced in susceptibility to bubbling or foaming.

The papermaking emulsion sizing agent of the present invention can be added to aqueous dispersions of pulps for use in sizing at a pH of 4 to 8 to give an outstanding sizing effect to paper over a wide pH range for papermaking. In this case, the emulsion sizing agent is used usually in an amount (by dry weight) of about 0.05 to about 3 wt. %, preferably 0.1 to 1 wt. %, based on the pulp.

The papermaking emulsion sizing agent differs in properties with the type of polymer dispersant incorporated therein and is therefore used under a suitably selected sizing condition. For example, calcium carbonate, which is not usable as a filler under acid conditions, can be used favorably with the present agent since sizing is done at a pH of 4 to 8. In the case where the polymer dispersant used in the agent is an anionic copolymer, the agent exhibits poor self-fixing properties, so that it is desirable to use aluminum sulfate generally in an amount (by dry weight) of about 1 to about 10 wt. %, preferably 2 to 5 wt. %, based on the pulp. On the other hand, when the polymer dispersant used is a cationic copolymer, the agent exhibits good self-fixing properties and aluminum sulfate is therefore used in a small amount, which is usually about 0.5 to about 2 wt. % based on the pulp (on the basis of dry weight). Cationic fixing agents, such as cationic starch, epichlorohydrin-modified polyamidopolyamine and like known agents, are also

usable usually in an amount of about 0.01 to about 1.0 wt. % based on the pulp (on dry weight basis). The sizing agent, aluminum sulfate and fixing agent are added to the pulp in a desired order.

The papermaking emulsion sizing agent of the invention is advantageously usable not only for making paper from cellulose fiber but also for preparing paper, paperboards, fiberboards, etc. from a mixture of cellulose fiber and a mineral fiber such as asbestos or rock wool, or a synthetic fiber, for example, of polyamide, polyester, polyolefin or the like.

The papermaking emulsion sizing agent of the present invention is usable also as a surface sizing agent. In this case, the agent is applied to wet paper by a conventional method such as spraying, dipping or coating.

The present invention has the following very remarkable advantages.

(1) The emulsion sizing agent comprises a specific reaction product, i.e., rosin substance, as a dispersed phase, so that the agent has good stability even at high pH values, can be effectively retained in pulps without permitting the rosin substance to migrate into water and exhibits an excellent sizing effect. The agent produces an outstanding sizing effect especially when incorporating a cationic copolymer or amphoteric copolymer as a dispersant.

(2) The sizing agent has good mechanical stability, is reduced in susceptibility to bubbling and therefore ensures an improved papermaking operation.

(3) The sizing agent produces a satisfactory sizing effect even when used for papermaking at high temperatures or high pH values and is therefore satisfactorily usable in closed papermaking systems.

(4) The sizing agent has high dilution stability in hard water and can therefore be diluted with tap water or water of rivers, wells, etc.

## BEST MODE OF CARRYING OUT THE INVENTION

The present invention will be described in greater detail with reference to the following examples and comparative examples, whereas the invention is not limited to these examples. The parts and percentages in the examples are by weight.

### Preparation Examples of Reaction Products for use in the Invention

#### Preparation Example 1

Into 1-liter flask equipped with a stirrer, thermometer, nitrogen supply tube, water separator and condenser were placed 100 parts of gum rosin having an acid value of 170 and 4 parts of glycerin (charge equivalent ratio (-OH/-COOH) = 0.43), which were then heated to 250 °C in a nitrogen stream and maintained at the same temperature for 8 hours for esterification to obtain a reaction mixture having a softening point of 81 °C and an acid value of 91. Subsequently, the reaction mixture was cooled to 160 °, 9 Parts of maleic anhydride was added to the mixture, and the resulting mixture was heated to and maintained at 210 °C for 2 hours, giving a reaction product having a softening point of 102 °C and an acid value of 183.

#### Preparation Example 2

A reaction product having a softening point of 105 °C and an acid value of 153 was obtained in the same manner as in Preparation Example 1 except that 6 parts of glycerin (equivalent ratio = 0.65) was used.

#### Preparation Example 3

A reaction product having a softening point of 115 °C and an acid value of 181 was obtained in the same manner as in Preparation Example 1 with the exception of using 4.4 parts of pentaerythritol (charge equivalent ratio = 0.43) in place of 4 parts of glycerin.

#### Preparation Example 4

A reaction product having a softening point of 106 °C and an acid value of 206 was obtained in the same manner as in Preparation Example 1 with the exception of using 12 parts of maleic anhydride (charge equivalent ratio = 0.43).

Preparation Example 5

A reaction product having a softening point of 122°C and an acid value of 183 was obtained in the same manner as in Preparation Example 1 with the exception of using 10.7 parts of fumaric acid (charge equivalent ratio = 0.43) instead of 9 parts of maleic anhydride.

Preparation Example 6

A reaction product having a softening point of 95°C and an acid value of 185 was obtained in the same manner as in Preparation Example 1 except that tall oil rosin having an acid value of 170 was used in the same amount as gum rosin instead of the gum rosin (equivalent ratio = 0.43).

Preparation Example 7

A reaction product having a softening point of 99°C and an acid value of 181 was obtained in the same manner as in Preparation Example 1 except that modified gum rosin prepared by treating 100 parts of gum rosin with 2 parts of formaldehyde was used in place of gum rosin (equivalent ratio = 0.43).

Preparation Example 8

Gum rosin (100 parts) having an acid value of 170 and 9 parts of maleic anhydride were heated to and maintained at 210°C for 2 hours, 4 parts of glycerin (equivalent ratio = 0.43) was thereafter added to the mixture, and the resulting mixture was heated at 250°C for 8 hours for esterification to obtain a reaction product having a softening point of 112°C and an acid value of 180.

Preparation Example 9

To 100 parts of gum rosin having an acid value of 170 were added 9 parts of maleic anhydride and 4 parts of glycerin (equivalent ratio = 0.43), and the mixture was heated at 250°C for 8 hours for a reaction to obtain a reaction product having a softening point of 113°C and an acid value of 179.

Comparative Preparation Example 1

A reaction product having a softening point of 98°C and an acid value of 252 was prepared by using the same reactor as in Example 1 and heating 100 parts of gum rosin having an acid value of 170 and 9 parts of maleic anhydride at 210°C for 2 hours.

Comparative Preparation Example 2

A reaction product having a softening point of 83°C and an acid value of 94 was prepared in the same manner as in Preparation Example 1 with the exception of effecting esterification only and not using maleic anhydride.

Preparation Examples of Polymer Dispersants

Preparation Example 10

Into a reactor equipped with a stirrer, thermometer, nitrogen supply tube and condenser were placed 50 parts of styrene, 10 parts of 2-ethylhexyl methacrylate, 40 parts of methacrylic acid, 5 parts of laurylmercaptan, 5 parts of sodium salt of polyoxyethylene(n=13)dodecylphenylether sulfuric acid ester, 2 parts of polyoxyethylene(n=9)oleyl ether, 3 parts of potassium persulfate and 400 parts of water, followed by mixing and a reaction at 80°C for 4 hours. The reaction mixture was thereafter cooled and stirred at 50°C for 1 hour with addition of ammonia in an equimolar amount to the anionic monomer to obtain an aqueous solution containing 20% of a saponified styrenemethacrylic acid polymer. The polymer was 10000 in weight average molecular weight.

Preparation Example 11

An aqueous solution containing 20% of a saponified polymer was prepared by conducting the same reaction as in Preparation Example 10 with the exception of using n-butyl methacrylate (50 parts), lauryl methacrylate (10 parts) and methacrylic acid (40 parts) as monomers in place of the monomers used in Preparation Example 10. The polymer obtained was 15000 in weight average molecular weight.

Preparation Example 12

Into a reactor equipped with a stirrer, thermometer, nitrogen supply tube and condenser were placed 230 parts of isopropyl alcohol, 70 parts of styrene and 37.5 parts of 80% aqueous solution of methacrylic acid dimethylaminoethylmethyl chloride, followed by stirring in a nitrogen gas atmosphere. Azobisisobutyronitrile (3 parts) serving as a polymerization initiator was thereafter added to the mixture, and the resulting mixture was heated to and maintained at 80 ° C for 4 hours. The mixture was further maintained at the same temperature for 3 hours with 1 part of azobisisobutyronitrile added thereto, 150 parts of ion-exchanged water was thereafter added to reaction mixture, and the isopropyl alcohol was distilled off. After the completion of distillation, ion-exchanged water was added to the product, giving an aqueous solution containing 30% of a cationic polymer. The polymer was 6000 in weight average molecular weight.

Preparation Example 13

Into a reactor equipped with a stirrer, thermometer, nitrogen supply tube and condenser were placed 130 parts of isopropyl alcohol, 100 parts of ion-exchanged water, 40 parts of ethyl methacrylate, 25 parts of n-butyl acrylate and 35 parts of methacrylamidopropyltrimethyl ammonium chloride. The mixture was heated to 50 ° C with stirring in a nitrogen gas atmosphere. With addition of 60 parts of 5% aqueous solution of ammonium persulfate serving as a polymerization initiator, the mixture was heated to and maintained at 80 ° C for 3 hours. The reaction mixture was futher maintained at the same temperature for 2 hours with 20 parts of 5% aqueous solution of ammonium persulfate added thereto, followed by addition of 50 g of ion-exchanged water and by the removal of isopropy alcohol by distillation. After the completion of distillation, ion-exchanged water was added to the product to obtain an aqueous solution containing 30% of a cationic polymer, which was 11000 in weight average molecular weight.

Preparation Example 14

Into a reactor equipped with a stirrer, thermometer, nitrogen supply tube and condenser were placed 250 parts of ion-exchanged water, 100 parts of 50% aqueous solution of acrylamide, 25 parts of 80% aqueous solution of acrylic acid, 37.5 parts of 80% aqueous solution of methacrylic acid dimethylaminoethylmethyl chloride and 160 parts of isopropyl alcohol. The mixture was heated to 60 ° C with stirring in a nitrogen gas atmosphere. With addition of 20 parts of 5% aqueous solution of ammonium peroxide serving as a polymerization initiator, the mixture was heated to and maintained at 80 ° C for 3 hours. The reaction mixture was further maintained at the same temperature for 2 hours with 10 parts of 5% aqueous solution of ammonium peroxide added thereto, followed by the removal of isopropyl alcohol by distillation and addition of ion-exchanged water, affording an aqueous solution containing 20% of an amphoteric polymer. The polymer was 15000 in weight average molecular weight.

Preparation of Emulsion Sizing Agents

Example 1

The reaction product (200 parts) obtained in Preparation Example 1 was dissolved in 200 parts of toluene, the solution was then mixed with 60 parts of the polymer dispersant obtained in Preparation Example 10 and 285 parts of hot water (60 ° C), the mixture was then made into an emulsion using a high-pressure emulsifier and the toluene was thereafter distilled off to prepare a dispersion having a concentration of 40%.

Examples 2-13 and Comparative Examples 1-3

Dispersions were prepared in the same manner as in Example 1 with the exception of replacing the reaction product of Preparation Example 1 and/or the polymer dispersant of the Preparation Example 10 as listed in Table 1.

Table 1

| | Reaction product | Polymer dispersant |
|---|---|---|
| Example 1 | Reaction product of Prep. Ex. 1 | Aqueous solution obtained in Prep. Ex. 10 |
| Example 2 | Reaction Product of Prep. Ex. 1 | Aqueous solution obtained in Prep. Ex. 11 |
| Example 3 | Reaction Product of Prep. Ex. 1 | Aqueous solution obtained in Prep. Ex. 12 |
| Example 4 | Reaction Product of Prep. Ex. 1 | Aqueous solution obtained in Prep. Ex. 13 |
| Example 5 | Reaction Product of Prep. Ex. 1 | Aqueous solution obtained in Prep. Ex. 14 |
| Example 6 | Reaction Product of Prep. Ex. 2 | Aqueous solution obtained in Prep. Ex. 10 |
| Example 7 | Reaction Product of Prep. Ex. 3 | Aqueous solution obtained in Prep. Ex. 11 |
| Example 8 | Reaction Product of Prep. Ex. 4 | Aqueous solution obtained in Prep. Ex. 12 |
| Example 9 | Reaction Product of Prep. Ex. 5 | Aqueous solution obtained in Prep. Ex. 13 |
| Example 10 | Reaction Product of Prep. Ex. 6 | Aqueous solution obtained in Prep. Ex. 14 |
| Example 11 | Reaction Product of Prep. Ex. 7 | Aqueous solution obtained in Prep. Ex. 10 |
| Example 12 | Reaction Product of Prep. Ex. 8 | Aqueous solution obtained in Prep. Ex. 12 |
| Example 13 | Reaction Product of Prep. Ex. 9 | Aqueous solution obtained in Prep. Ex. 14 |
| Comp. Ex. 1 | Reaction Product of Comp. Prep. Ex. 1 | Aqueous solution obtained in Prep. Ex. 10 |
| Comp. Ex. 2 | Reaction Product of Comp. Prep. Ex. 2 | Aqueous solution obtained in Prep. Ex. 10 |
| Comp. Ex. 3 | Reaction Product of Comp. Prep. Ex. 1 | Aqueous solution obtained in Prep. Ex. 12 |

Example 14

The reaction product (300 parts) obtained in Preparation Example 1 was melted by heating to 160 °C, and 150 parts of the polymer dispersant (as adjusted to 20% solution) obtained in Preparation Example 10 was added to the molten product with stirring over a period of 1 hour to obtain a water-in-oil emulsion. Hot water was added in small portions to the emulsion with stirring for phase reversion to obtain an oil-in-water emulsion, which was further diluted with hot water to prepare a dispersion having a concentration of 50%.

Example 15

A dispersion having a concentration of 50% was prepared in the same manner as in Example 14 with the exception of using the polymer dispersant obtained in Preparation Example 12 in place of the polymer dispersant obtained in Preparation Example 10.

Papermaking Test

The aqueous dispersions prepared, i.e., papermaking emulsion sizing agents of the invention, were used for papermaking according to the paper sizing method of the invention and checked for sizing properties by the following methods I and II.

Method I

Pulp (L-BKP) was subjected to a beating operation to a Canadian standard freeness of 450 ml and made into a 1% slurry. Calcium carbonate (brand: "ESCARON #100," product of Sankyo Seifun Co., Ltd.) was added to the slurry as a filler in an amount of 2% calculated as solids based on the pulp, followed by stirring for 3 minutes. Next, aluminum sulfate was added to the slurry in an amount of 2% calculated as solids based on the pulp. Further 1 minute, 5 minutes or 10 minutes thereafter, the sizing agent obtained in each of Examples and Comparative Examples was added in an amount of 0.4% based on the pulp, followed by stirring for 1 minute to uniformly disperse the agent in the slurry. At this time, the pH of the pulp slurry was 6.6 in 1 minute, 7.1 in 5 minutes and 7.5 in 10 minutes. The slurry obtained was made into paper weighing 60 $g/m^2$ by a Tappi standard sheet machine. The wet paper obtained was then dewatered by compression, dried at 100 °C for 1 minute, stabilized at a relative humidity of 65% for 24 hours and thereafter checked for sizing degree (sec) according to the Stöckigt method (JIS P8122). Table 2 shows the result.

Method II

To the same slurry as prepared by Method I by adding calcium carbonate to the starting slurry was added the sizing agent obtained in each of Examples and Comparative Examples in an amount of 0.4% based on the pulp. Further 1 minute, 5 minutes or 10 minutes thereafter, aluminum sulfate was added to the slurry in an amount of 2% calculated as solids based on the pulp, followed by stirring for 1 minute to uniformly disperse the sulfate. The resulting slurry was 6.6 in pH. The slurry obtained was made into paper weighing 60 $g/m^2$ by a Tappi standard sheet machine. The wet paper obtained was then dewatered by compression, dried at 100 °C for 1 minute, stabilized at a relative humidity of 65% for 24 hours and thereafter checked for sizing degree (sec) according to the Stöckigt method (JIS P8122). Table 2 shows the result.

Hard Water Dilution Stability Test

The sizing agents, i.e. aqueous dispersions, of Examples and Comprative Examples were checked for hard water dilution stability. Each of the dispersions was diluted to 5% with different kinds of synthetic hard water, and the dilutions were checked for changes according to the following criteria.

A: dispersal
B: slight coagulation
C: coagulation

Table 2 shows the result.

Table 2

| | Stöckigt sizing degree (sec) | | | | | | Hard water dilution stability | |
|---|---|---|---|---|---|---|---|---|
| | Method I | | | Method II | | | Hardness 300°DH | Hardness 1000°DH |
| | In 1 min. | In 5 min. | In 10 min. | In 1 min. | In 5 min. | In 10 min. | | |
| Example 1 | 39 | 38 | 35 | 38 | 33 | 32 | A | A |
| Example 2 | 38 | 37 | 34 | 39 | 33 | 33 | A | A |
| Example 3 | 41 | 40 | 40 | 36 | 34 | 34 | A | A |
| Example 4 | 40 | 40 | 40 | 35 | 34 | 33 | A | A |
| Example 5 | 40 | 39 | 38 | 37 | 35 | 34 | A | A |
| Example 6 | 38 | 36 | 34 | 39 | 33 | 32 | A | A |
| Example 7 | 37 | 35 | 33 | 39 | 33 | 31 | A | A |
| Example 8 | 40 | 39 | 39 | 36 | 35 | 34 | A | A |
| Example 9 | 41 | 40 | 39 | 35 | 34 | 33 | A | A |
| Example 10 | 39 | 38 | 37 | 36 | 33 | 31 | A | A |
| Example 11 | 39 | 37 | 34 | 38 | 32 | 31 | A | A |
| Example 12 | 40 | 40 | 39 | 36 | 35 | 34 | A | A |
| Example 13 | 40 | 39 | 38 | 37 | 33 | 32 | A | A |
| Example 14 | 40 | 39 | 39 | 35 | 34 | 33 | A | A |
| Example 15 | 38 | 36 | 34 | 36 | 32 | 31 | A | A |
| Comp. Ex. 1 | 35 | 21 | 3 | 36 | 13 | 7 | C | C |
| Comp. Ex. 2 | 36 | 25 | 15 | 35 | 25 | 13 | B | B |
| Comp. Ex. 3 | 31 | 26 | 8 | 35 | 15 | 9 | B | C |

## Claims

1. A rosin emulsion sizing agent for papermaking characterized in that a reaction product is dispersed in water in the presence of a polymer dispersant, the reaction product being prepared by successively or simultaneously reacting (b) a polyhydric alcohol and (c) an $\alpha,\beta$-unsaturated carboxylic acid derivative

with (a) a rosin, the ratio of equivalent of hydroxyl group in the alcohol (b) to equivalent of carboxyl group in the rosin (a) being 0.1-1.5:1.

**2.** A rosin emulsion sizing agent for papermaking as defined in claim 1 wherein the polymer dispersant is a cationic copolymer or an amphoteric copolymer.

**3.** A rosin emulsion sizing agent for papermaking as defined in one or more of the claims 1-2 wherein the polymer dispersant has a weight average molecular weight of 1000 to 200000.

**4.** A rosin emulsion sizing agent for papermaking as defined in one or more of the claims 1-3 which contains the polymer dispersant in an amount by dry weight of 1 to 30 wt. % based on the reaction product.

**5.** A paper sizing method characterized by using a papermaking rosin emulsion sizing agent as defined in one or more of the claims 1-4 in a pH range of 4 to 8.

# INTERNATIONAL SEARCH REPORT

International Application No PCT/JP92/00375

**I. CLASSIFICATION OF SUBJECT MATTER** (if several classification symbols apply, indicate all) [6]

According to International Patent Classification (IPC) or to both National Classification and IPC

Int. $Cl^5$ D21H17/62

**II. FIELDS SEARCHED**

Minimum Documentation Searched [7]

| Classification System | Classification Symbols |
|---|---|
| IPC | D21H17/62 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 55-25444 (Kindai Kagaku Kogyo K.K.), February 23, 1980 (23. 02. 80), (Family: none) | 1-5 |
| X | JP, A, 60-161472 (Krems-Chemie, GmbH), August 23, 1985 (23. 08. 85), & FI, A, 850211 & PT, A, 79812 & NO, A, 850058 & EP, A, 150754 & AU, A, 3765658 & US, A, 4540635 & ZA, A, 8500425 & ES, A, 539689 & NZ, A, 210852 & AT, A, 384841 & CA, A, 1244005 | 1-5 |
| X | US, A, 3044890 (G. J. Boughton etal), July 17, 1962 (17. 07. 62), (Family: none) | 1-5 |
| A | JP, A, 62-223393 (Arakawa Chemical Industries Ltd.), October 1, 1987 (01. 10. 87), & DE, A, 3708854 & US, A, 4842691 | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 12, 1992 (12. 06. 92) | July 7, 1992 (07. 07. 92) |
| **International Searching Authority** | **Signature of Authorized Officer** |
| Japanese Patent Office | |